# EUROPEAN PATENT APPLICATION

(11) **EP 3 028 925 A1**
(43) Date of publication of application: **08.06.2016**
(21) Application number: 14831478.4
(22) Date of filing: 31.07.2014
(51) Int. Cl.: B62D 1/184, B62D 1/187

(54) **STEERING DEVICE**

(30) Priority: 31.07.2013 JP 2013159624
(71) Applicant: JTEKT Corporation, Osaka-shi, Osaka 542-8502 (JP)
(72) Inventor: OKANO, Ryota, Osaka-shi Osaka 542-8502 (JP); NAGAOKA, Masayuki, Osaka-shi Osaka 542-8502 (JP); UESAKA, Yota, Kosai-shi Shizuoka 431-0431 (JP)
(74) Representative: Winter, Brandl, Fürniss, Hübner, Röss, Kaiser, Polte - Partnerschaft mbB
(86) International application number: PCT/JP2014/070213
(87) International publication number: WO 2015/016311

(57) **Abstract**

A movable teeth row formed member 30 is supported so as not only to move together with an operation shaft 24 in a position adjusting direction (a tilting direction Y) but also to rotate around a pivot shaft 29 which is parallel to the operation shaft 24 in a first rotating direction T1 and a second rotating direction T2. A lock biasing mechanism 33 causes the movable teeth row formed member 30 in the first rotating direction T1 via an elastic member 32 as an operation lever 26 is operated to rotate in a locking direction R1, so that a movable teeth row 31 is caused to move towards a fixed teeth row 28 for meshing engagement with the fixed teeth row 28.

## Description

### Technical Field

The present invention relates to a steering device.

### Background Art

In steering devices in which the position of a steering wheel can be adjusted in a tilting direction and a telescoping direction, there are proposed steering devices in which in locking a steering wheel in a desired position, a tilt lock is achieved by causing teeth of a tilting gear base to mesh engagement with teeth of a tilting gear member, and a telescopic lock is achieved by causing teeth of a telescoping gear base to mesh engagement with teeth of a telescoping gear member (for example, refer to Patent Literature 1).

### Citation List

### Patent Literature

[Patent Literature 1] Japanese Patent No. 5,233,674

### Summary of Invention

### Technical Problem

In Patent Literature 1, teeth which mesh engagement with each other are connected together rigidly in the meshing direction. Because of this, in the event of a state occurring in which face portions of the teeth are brought into abutment with each other (a so-called half-lock state) when an operation lever is operated to rotate in a locking direction to lock a steering wheel in position, in case the teeth are brought into meshing engagement with each other by an impact produced for some reason, the axial tension acting on the shaft is reduced, resulting in fears that a problem is caused that sufficient lock holding force cannot be obtained.

To prevent this problem, in the event that a distance over which the corresponding teeth move towards and away from each other in the axial direction of the shaft is set small when locking and releasing the locking of the steering wheel, there are fears that a lock release cannot be achieved in an ensured fashion when the operation lever is operated to rotate in a lock releasing direction in order to release the lock. In addition, the operation force with which the operation lever is operated for locking becomes heavy, resulting in fears that the operation feeling of the operation lever is deteriorated.

An object of the invention is to provide a steering device which can provide a superior operation feeling when an operation lever is operated, which can obtain sufficient lock holding force even in the event that a state is caused in which face portions of teeth are brought into abutment with each other, and which can execute a lock release in an ensured fashion.

### Solution to Problem

With a view to achieve the object, according to an invention of Claim 1, there is provided a steering device (1) which enables a positional adjustment in a position adjusting direction, comprising:
a steering shaft (4) to one end of which a steering member (2) is connected;
a steering column (8) which supports the steering shaft rotatably;
a fixed bracket (18) which is fixed to a vehicle body (14);
a column bracket (17) which is fixed to the steering column and which is configured to move together with at least a portion of the steering column in the position adjusting direction when a position of the steering column is adjusted; and
a lock mechanism (19) which locks the steering column so as to be able to be released to a state in which the position of the steering column can be adjusted, wherein
the lock mechanism includes:
   an operation shaft (24) which passes through a passage hole (22) in a fixed side plate (21 L, 21 R) of the fixed bracket and a passage hole (40) in a column side plate (23L, 23R) of the column bracket;
   an operation lever (26) which is operated to rotate in a locking direction (R1) or a lock releasing direction (R2) about a center axis (C) of the operation shaft;
   a fixed teeth row formed member (27, 27A; 27B, 27C) which is fixed to the fixed bracket and which is formed with a fixed teeth row (28, 28A; 28B, 28C) undulating in a perpendicular direction (V) intersecting an axial direction (Z) of the operation shaft at right angles;
   a movable teeth row formed member (30, 30A; 30B, 30C) which can move together with the operation shaft in the position adjusting direction, which is supported around a pivot shaft (29, 29A) parallel to the operation shaft so as to rotate in a first rotating direction (T1) and a second rotating direction (T2), and which is formed with a movable teeth row (31, 31 A; 31 B, 31 C) that meshes with the fixed teeth row when the movable teeth row formed member rotates in the first rotating direction and that moves away from the fixed teeth row when the movable teeth row formed member rotates in the second rotating direction;
   a lock biasing mechanism (33, 33A) which includes an elastic member and which biases the movable teeth row formed member in the first rotating direction via the elastic member (32, 32A) so that the movable teeth row meshes with the fixed teeth row as the operation lever is operated to rotate in the locking direction; and
   a lock releasing mechanism (37, 37A) which causes the movable teeth row formed member to rotate in the second rotating direction against the elastic member so that the movable teeth row moves away from the fixed teeth row when the operation lever is operated to rotate in the lock releasing direction.

Parenthesized alphanumeric characters denote corresponding configuring elements in embodiments of the invention which will be described below. However, this does not, of course, mean that the invention is limited by the embodiments, which will be true in relation to the further description of the means for solving the problem.

In addition, as claimed in Claim 2, the lock biasing mechanism may include a locking pressing portion (35, 35A) which is provided on the operation lever or a member (34, 60) which rotates together with the operation lever and a locking pressed member (36, 36A) which is provided on the movable teeth row formed member, and the elastic member may be interposed between the locking pressing portion and the locking pressed portion.

As claimed in Claim 3, the lock releasing mechanism may include a lock releasing pressing portion (38, 38A) which is provided on the operation lever or a member (34, 60) which rotates together with the operation lever and a lock releasing pressed portion (39, 39A) which is provided on the movable teeth row formed member.

Additionally, as claimed in Claim 4, in Claim 2 or 3, the steering device may include a tightening mechanism (44) which tightens the fixed side plates (21 L, 21 R) against the column side plates (23L, 23R), and the tightening mechanism may include a cam mechanism (46) which includes a first cam (34) fitted on the operation shaft to rotate together with the operation lever and a second cam (47) fitted on the operation shaft to be restricted from rotating by the passage hole of the fixed bracket and which is brought into engagement with the first cam, and the locking pressing portion may be provided on the first cam.

In addition, as claimed in Claim 5, the steering device may include a plurality of fixed teeth row formed members, and a plurality of movable teeth row formed members each of which includes a movable teeth row meshing with a corresponding fixed teeth row of each of the plurality of fixed teeth row formed members.

### Advantageous Effect of Invention

According to the invention of Claim 1, the lock biasing mechanism causes the movable teeth row formed member to rotate in the first rotating direction via the elastic member as the operation lever is operated to rotate in the locking direction so as to cause the movable teeth row to move to the fixed teeth row. As this occurs, even in the event that a state occurs in which face portions of teeth of the movable teeth row are brought into abutment with face portions of teeth of the fixed teeth row or even in the event that the state in which the face portions of the movable teeth row are in abutment with the face portions of the teeth of the fixed teeth row is shifted to a state in which the movable teeth row is brought into meshing engagement with the fixed teeth row by an impact produced for some reason, it is possible to obtain sufficient lock holding force between both the teeth rows by the biasing force of the elastic member.

Both the teeth rows undulate in the direction which intersects the axial direction of the operation shaft at right angles, and moreover, the movable teeth row is biased towards the fixed teeth row via the elastic member. Therefore, there is no such situation that the operating force of the operation lever is increased excessively, and hence, a good operating feeling is provided.

Additionally, although the lock biasing elastic member is used, there is no such situation that the elastic member interrupts a lock release. Namely, the lock releasing mechanism causes the movable teeth row formed member to rotate in the second rotating direction against the elastic member as the operation lever is operated to rotate in the lock releasing direction so as to cause the movable teeth row to move away from the fixed teeth row, and therefore, the lock can be released in an ensured fashion.

According to the invention in Claim 2, when locking the steering column, the locking pressing portion provided on the operation lever or the member which rotates together with the operation lever presses against the locking pressed portion provided on the movable teeth row formed member via the elastic member, whereby even in the event that the state occurs in which the face portions of the teeth of the movable teeth row are in abutment with the face portions of the teeth of the fixed teeth row, it is possible to obtain sufficient lock holding force between both the teeth rows.

According to the invention in Claim 3, when the locking of the steering column is released, the lock releasing pressing portion which is provided on the operation lever or the member which rotates together with the operation lever presses against the lock releasing pressed portion which is provided on the movable teeth row formed member, whereby the locking of the steering column can be released in an ensured fashion.

According to the invention in Claim 4, when locking the steering column, it is possible to obtain holding force which holds the operation lever in position by the cam mechanism including the first cam and the second cam which are brought into engagement with each other. The locking pressing portion is provided on the first cam, and therefore, the configuration can be simplified.

According to the invention in Claim 5, the plurality of fixed teeth rows are brought into meshing engagement with the plurality of movable teeth rows, and therefore, the locking force can be enhanced remarkably.

### Brief Description of Drawings

Fig. 1 is a schematic side view showing a schematic configuration of a steering device of an embodiment of the invention.
Fig. 2 is a schematic perspective view of the steering device shown in Fig. 1.
Fig. 3 is a sectional view of a main part of the steering device shown in Fig. 1.
Fig. 4 is a schematic view showing a locking state of a tilt lock mechanism which is disposed at one end side of an operation shaft.
Fig. 5 is a schematic view showing a lock releasing state of the tile lock mechanism shown in Fig. 4.
Fig. 6 is a schematic view showing a lock releasing state of a tile lock mechanism which is disposed at the other end side of the operation shaft.
Fig. 7 is a schematic view showing a lock releasing state of tilt lock mechanisms in another embodiment of the invention.

### Description of Embodiment

Embodiments of the invention will be described by reference to the accompanying drawings.

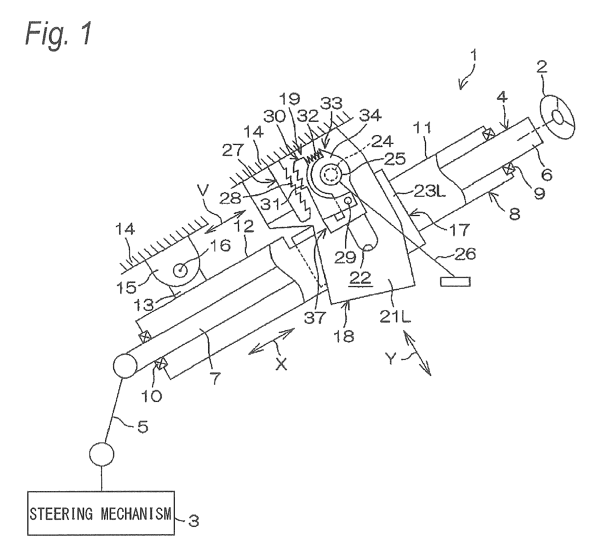

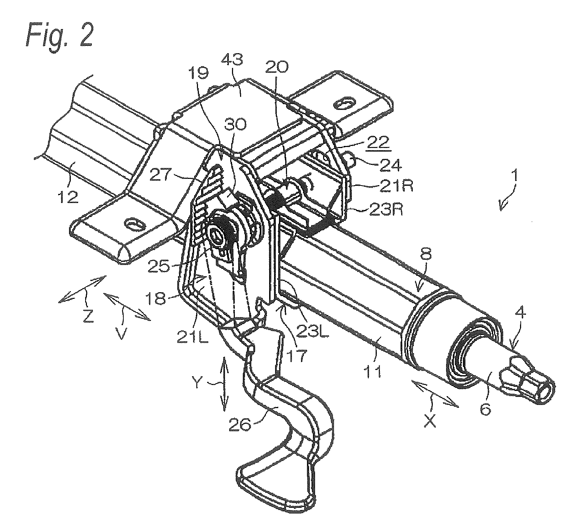

Fig. 1 is a schematic side view showing a schematic configuration of a steering device according to an embodiment of the invention, and Fig. 2 is a schematic perspective view of the steering device. Referring to Fig. 1, a steering device 1 includes a steering member 2 such as a steering wheel and a steering mechanism 3 which is interlocked with the turning of the steering member 2 to turn steered wheels (not shown). For example, a rack-and-pinion mechanism is used as the steering mechanism 3.

The steering member 2 is mechanically connected to the steering mechanism 3 via a steering shaft 4 and an intermediate shaft 5. A rotation of the steering member 2 is transmitted to the steering mechanism 3 via the steering shaft 4 and the intermediate shaft 5. Then, the rotation transmitted to the steering mechanism 3 is converted into an axial movement of a rack shaft, now shown. This turns the steered wheels.

The steering shaft 4 includes a cylindrical upper shaft 6 and a cylindrical lower shaft 7 which are fitted together through, for example, spline fitting or serration fitting so as to slide relative to each other. The steering member 2 is connected to one end of the upper shaft 6. The steering shaft 4 can extend and contract in a telescoping direction X which corresponds to an axial direction thereof. The steering shaft 4 is inserted through a cylindrical steering column 8 and is supported rotatably by the steering column 8 via a plurality of bearings 9, 10.

The steering column 8 includes an outer cylindrical upper jacket 11 and an inner cylindrical lower jacket 12 which are fitted together so as to slide relative to each other. The steering column 8 can extend and contract as a result of the upper jacket 11 (portion of the steering column 8) sliding in the axial direction (the telescoping direction X) relative to the lower jacket 12.

The upper jacket 11 supports the upper shaft 6 rotatably via the bearing 9. Additionally, the upper jacket 11, which is a movable jacket, is connected to the upper shaft 6 via the bearing 9 so as to move together the upper shaft 6 in the axial direction (corresponding to the telescoping direction X) of the steering shaft 4.

A lower column bracket 13 which is fixed to the lower jacket 12 so as to move together therewith is supported rotatably on a lower fixed bracket 15 which is fixed to a vehicle body 14 via a tilt center shaft 16. This allows the steering column 8 and the steering shaft 4 to rotate (tilt) about the tilt center shaft 16 as a fulcrum.

By allowing the steering shaft 4 and the steering column 8 to rotate (tilt) about the tilt center shaft 16 as the fulcrum, the position of the steering member 2 can be adjusted (a so-called tilting adjustment). Additionally, by causing the steering shaft 4 and the upper jacket 11 to extend and contract in the axial direction (the telescoping direction X), the position of the steering member 2 can also be adjusted (a so-called telescoping adjustment).

An upper column bracket 17 is provided integrally with the lower jacket 12. The column bracket 17 may be provided as a separate member from the lower jacket 12 so as to be then fixed to the lower jacket 12 or may be provided integrally with the lower jacket 12 using a single type of material. In addition, an upper fixed bracket 18 is fixed to the vehicle body 14.

The steering device 1 includes a tilt lock mechanism 19 which locks and releases the lock of the lower jacket 12 of the steering column 8 in a desired tilt position and a telescopic lock mechanism 20 which locks and releases the lock of the upper jacket 11 of the steering column 8 in a desired telescopic position.

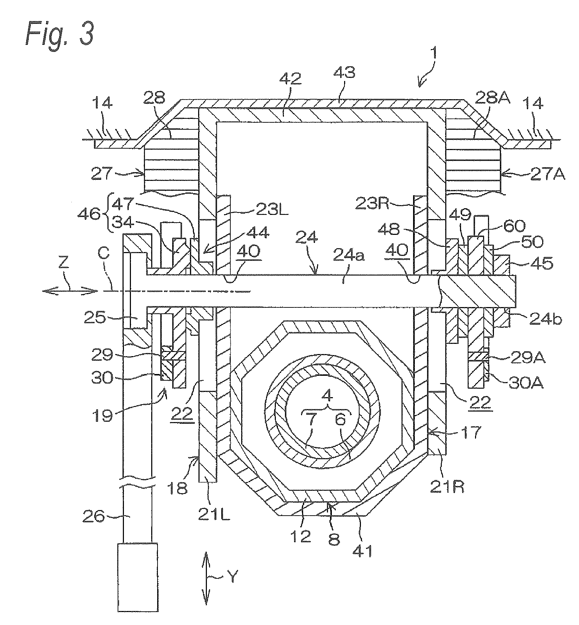

The tilt lock mechanism 19 includes an operation shaft 24 which passes through tilt holes (passage holes) 22 which are vertically elongated holes provided in fixed side plates 21 L, 21 R (in Fig. 1, only one fixed side plate 21 L is shown) of the fixed bracket 18 and passage holes (not shown in Fig. 1, passage holes 40 in Fig. 3, which will be described later) which are circular holes provided in column side plates 23L, 23R (in Fig. 1, only one column side plate 23L is shown) of the column bracket 17, and an operation lever 26 which is connected to a head portion 25 provided at one end of the operation shaft 24 so as to rotate about a center axis C of the operation shaft 24 together with the operation shaft 24 and which can manually be rotated and operated by the driver.

The tilt lock mechanism 19 includes a fixed teeth row formed member 27 which is fixed to the fixed bracket 18. The fixed teeth row formed member 27 includes a fixed teeth row 28 formed thereon, and this fixed teeth row 28 undulates in a perpendicular direction V (refer to Fig. 2) which intersects an axial direction of the operation shaft 24 (a perpendicular direction to Fig. 1, and an axial direction Z in Fig. 2) at right angles.

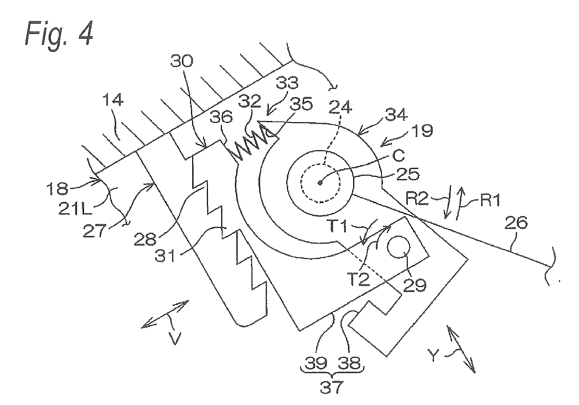

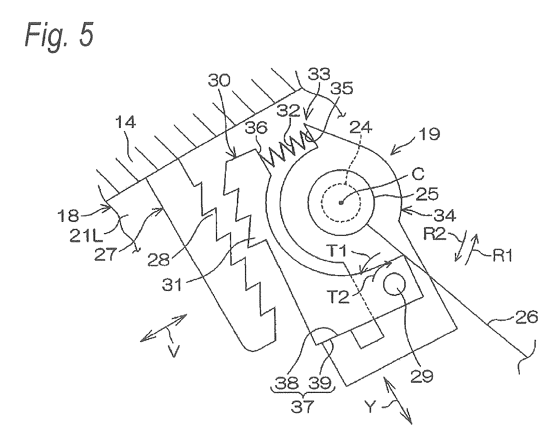

Additionally, as shown in Figs. 4, 5, the tilt lock mechanism 19 includes a movable teeth row formed member 30 which can move in a tilting direction Y together with the operation shaft 24 and the column side plates 23 and which is supported around a pivot shaft 29 (refer to Fig. 3) which is parallel to the operation shaft 24 so as to rotate in a first rotating direction T1 (a counterclockwise direction in Fig. 4) and a second rotating direction T2 (a clockwise direction in Fig. 4). The pivot shaft 29 is supported by the operation lever 26 or a member which rotates together with the operation lever 26 (a first cam 34 as a member which rotates together with the operation lever 26 in this embodiment).

The movable teeth row formed member 30 has a movable teeth row 31 formed thereon, and this movable teeth row 31 is brought into meshing engagement with the fixed teeth row 28 as the movable teeth row formed member 30 rotates in the first rotating direction T1 as shown in Fig. 4 and is caused to move away from the fixed teeth row 28 as the movable teeth row formed member 30 rotates in the second rotating direction T2 as shown in Fig. 5.

As shown in Fig. 2, the fixed teeth row formed member 27 and the movable teeth row formed member 30 are disposed at one end side of the operation shaft 24 and the outside of the fixed side plate 21 L.

Referring to Fig. 4, the tilt lock mechanism 19 includes a lock biasing mechanism 33 which biases the movable teeth row formed member 30 in the first rotating direction T1 via an elastic member 32 as the operation lever 26 is operated to rotate in the locking direction R1 so as to bring the movable teeth row 31 into meshing engagement with the fixed teeth row 28. The elastic member 32 may be a compression coil sprig as shown in the figures, a rod-like elastic member or a plate spring such as a coned disc spring.

Specifically, the lock biasing mechanism 33 includes the locking pressing portion 35 which is provided on the first cam 34 which is the member rotating together with the operation lever 26, the locking pressed portion 36 which is provided on the movable teeth row formed member 30 and the elastic member 32. The elastic member 32 is interposed between the locking pressing portion 35 and the locking pressed portion 36.

The locking pressing portion 35 presses against the locking pressed portion 36 via the elastic member 32 as the operation lever 26 is operated to rotate in the locking direction R1, whereby the movable teeth row formed member 30 is rotationally biased around the pivot shaft 29 in the first rotating direction T1. As a result of this, the movable teeth row 31 is brought into meshing engagement with the fixed teeth row 28, whereby a tilt lock is achieved.

Referring to Fig. 5, the tilt lock mechanism 19 includes a lock releasing mechanism 37 which causes the movable teeth row formed member 30 to rotate in the second rotating direction T2 against the elastic member 32 as the operation lever 26 is operated to rotate in the lock releasing direction R2 so as to cause the movable teeth row 31 to move away from the fixed teeth row 28.

The lock releasing mechanism 37 includes a lock releasing pressing portion 38 which is provided on the first cam 34 which is the member rotating together with the operation lever 26 and the lock releasing pressed portion 39 which is provided on the movable teeth row formed portion 30.

The lock releasing pressing portion 38 presses against the lock releasing pressed portion 39 as the operation lever 26 is operated to rotate in the lock releasing direction R2, whereby the movable teeth row formed member 30 is rotationally biased around the pivot shaft 29 in the second rotating direction T2 against the elastic member 32. As a result of this, the movable teeth row 31 is caused to move away from the fixed teeth row 28, whereby the tilt lock is released.

The first cam 34 which is the member rotating together with the operation lever 26 (the operation shaft 24) functions as a drive member which drives the movable teeth row formed member 30 around the pivot shaft 29 in the first rotating direction T1 and the second rotating direction T2.

In this embodiment, the locking pressing portion 35 of the lock biasing mechanism 33 and the lock releasing pressing portion 39 of the lock releasing mechanism 37 are described as being provided on the member (the first cam 34) that rotates together with the operation lever 26. However, at least one of the locking pressing portion 35 and the lock releasing pressing portion 39 may be provided integrally with the operation lever 26 using a single material. In addition, the pivot shaft 29 which supports rotatably the movable teeth row formed member 30 may be supported by the operation lever 26.

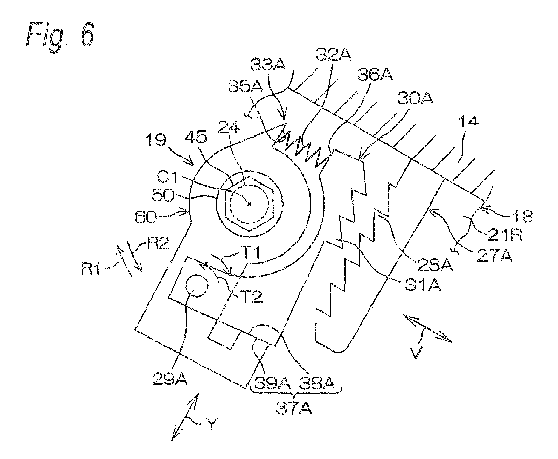

Additionally, as shown in Fig. 6, the tile lock mechanism 19 includes a fixed teeth row formed member 27A and a movable teeth row formed member 30A which are disposed at the other end side of the operation shaft 24 and the outside of the fixed side plate 21 R so as to be laterally symmetric with the fixed teeth row formed member 27 and the movable teeth row formed member 30, which are shown in Fig. 4, respectively. The fixed teeth row formed member 27A includes a fixed teeth row 28A and is fixed to the other fixed side plate 21 R. The movable teeth row formed member 30A includes a movable teeth row 31A and is supported around a pivot shaft 29A which is supported by a drive member 60 (refer to Fig. 3) so as to rotate therearound in the first rotating direction T1 and the second rotating direction T2.

The tilt lock mechanism 19 includes the drive member 60 (refer to Fig. 3) which can turn together with the other end of the operation shaft 24. Referring to Fig. 6, a lock biasing mechanism 33A is made up of a locking pressing portion 35A which is provided on the drive member 60, a locking pressed portion 36A which is provided on the movable teeth row formed member 30A and an elastic member 32A which is interposed between the locking pressing portion 35A and the locking pressed portion 36A. Additionally, a lock releasing mechanism 37A is made up of a lock releasing pressing portion 38A which is provided on the drive member 60 and a lock releasing pressed portion 39A which is provided on the movable teeth row formed member 30A.

Referring to Fig. 3, the column bracket 17 is a groove member which is opened upwardly and is formed laterally symmetrical in Fig. 3. Namely, the column bracket 17 includes a pair of column side plates 23L, 23R in which passage holes 40 made up of circular holes are provided individually and a connecting plate 41 which extends between ends (lower ends in Fig. 3) of the pair of column side plates 23L, 23R to connect them together. The connecting plate 41 may have, for example, a polygonal shape so as to follow an external shape of the lower jacket 12 having a polygonal cross section.

The fixed bracket 18 is a groove member which is opened downwardly. Namely, the fixed bracket 18 includes the pair of fixed side plates 21L, 21 R in which tilt holes 22 are formed individually and a connecting plate 42 which extends between ends (upper ends in Fig. 3) of the pair of fixed side plates 21 L, 21 R to connect them together. An attaching stay 43 is fixed to an upper surface of the connecting plate 42, and the attaching stay 43 is fixed to the vehicle body 14 with a fixing bolt (not shown).

The steering device 1 includes a tightening mechanism 44 which tightens the fixed side plates 21 L, 21 R against the corresponding column side plates 23L, 23R so as to impart holding force which holds the operation lever 26 in a lock position in a tilt locking. A shaft portion 24a of the operation shaft 24 passes through the tilt holes 22 in the pair of fixed side plates 21 L, 21 R and the passage holes 40 which are made up of the circular holes in the pair of column side plates 23L, 23R and functions as a tightening shaft.

The tightening mechanism 44 includes a nut 45 which is screwed on a threaded portion 24b which is provided at the other end of the operation shaft 24, the first cam 34 and a second cam 47 which are fitted on a portion of the shaft portion 24a which lies near the head portion 25 of the operation shaft 24 to make up a cam mechanism 46 and a tightening member 48 which is fitted on a portion of the shaft portion 24a which lies near the other end of the operation shaft 24 so as to follow an outer surface side of the other fixed side plate 21 R and which can move along the tilt hole 22. A boss of the tightening member 48 is fitted in the tilt hole 22 in the other fixed side plate 21 R so that the rotation thereof is restricted.

In the tightening mechanism 44, the drive member 60 shown in Fig. 6, which the member rotating together with the operation shaft 24 (the operation lever 26), is interposed between the tightening member 48 and the nut 45. The drive member 60 is fitted on an outer circumference of the other end of the shaft portion 24a of the operation shaft 24 so as to rotate together therewith. In addition, a thrust bearing 49 which is fitted on the outer circumference of the shaft portion 24a of the operation shaft 24 is interposed between the tightening member 48 and the drive member 60, and a thrust bearing 50 which is fitted on the outer circumference of the shaft portion 24a of the operation shaft 24 is interposed between the drive member 60 and the nut 45.

A plurality of cam projections are formed on confronting surfaces of the first cam 34 and the second cam 47 of the cam mechanism 46 so as to mesh engagement with each other. The first cam 34 is restricted from rotating relative to the shaft portion 24a of the operation shaft 24 so as to rotate together with the operation lever 26. The second cam 47 is restricted from rotating by the tilt hole 22 in the fixed side plate 21 L.

In addition, when a tilting adjustment is carried out, the second cam 47 and the tightening member 48 are guided in the tilting direction Y by the tilt holes 22 in the fixed side plates 21 L, 21 R which correspond to the second cam 47 and the tightening member 48, respectively. On the other hand, the shaft portion 24a of the operation shaft 24 passes through the passage holes 40 which are made up of the circular holes formed in the column side plates 23L, 23R, and therefore, when the tilting adjustment is carried out, the column bracket 17 which is integral with the lower jacket 12 moves in the tilting direction Y together with the operation shaft 24.

When the operation shaft 24 rotates as the operation lever 26 is operated to rotate, the first cam 34 causes the second cam 47 to move towards the left fixed side plate 21 L of the fixed bracket 18. This causes the second cam 47 and the tightening member 48 to hold the pair of fixed side plates 21L, 21R of the fixed bracket 18 from outer sides thereof so as to tighten the plates. As a result of this, the pair of fixed side plates 21L, 21 R of the fixed bracket 18 hold the corresponding the column side plates 23L, 23R of the column bracket 17, whereby the pair of fixed side plates 21 L, 21 R are brought into press contact with the corresponding column side plates 23L, 23R. Then, the first cam 34 and the second cam 47 are brought into press contact with each other by an axial tension of the operation shaft 24 produced by the press contact of the fixed side plates 21 L, 21 R with the column side pates 23L, 23R, and holding force is imparted to the operation lever 26 to hold its lock position.

It is noted that the telescopic lock mechanism 20 is omitted in Fig. 3.

According to the embodiment, the lock biasing mechanisms 33, 33A cause the movable teeth row formed members 30, 30A to rotate in the first rotating direction T1 via the elastic members 32, 32A as the operation lever 26 is operated to rotate in the locking direction R1, so that the movable teeth rows 31, 31A move towards the fixed teeth rows 28, 28A.

As this occurs, even in the event that a state occurs in which face portions of teeth of the movable teeth rows 31, 31A are brought into abutment with face portions of teeth of the fixed teeth rows 28, 28A (not shown) or even in the event that the state in which the faces portions of the teeth of the movable teeth rows are in abutment with the face portions of the teeth of the fixed teeth rows is shifted to a state in which the teeth rows 31, 28; 31 A, 28A are brought into meshing engagement with each other by an impact produced for some reason, it is possible to obtain sufficient lock holding force between both the teeth rows 31, 28; 31A, 28A by the biasing forces of the elastic members 32, 32A.

In addition, the movable teeth rows 31, 31A are biased towards the fixed teeth rows 28, 28A via the elastic members 32, 32A, and therefore, there is no such situation that the operating force of the operation lever 26 is increased too high, providing a good operation feeling.

Although the lock biasing elastic members 32, 32A are used, there is no such situation that the elastic members 32, 32A interrupt a lock release. Namely, the lock releasing mechanisms 37, 37A cause the movable teeth row formed members 30, 30A to rotate in the second rotating direction T2 against the elastic members 32, 32A as the operation lever 26 is operated to rotate in the lock releasing direction R2 so that the movable teeth rows 31, 31A are caused to move away from the fixed teeth rows 28, 28A, and therefore, a lock can be released in an ensured fashion.

Both the teeth rows 31, 28; 31A, 28A are configured to undulate in the perpendicular direction V which intersects the axial direction Z of the operation shaft 24 at right angles, and therefore, there is imposed no limitation on space, although such limitation is imposed on the conventional steering device in which both the teeth rows are held in the axial direction of the operation shaft. Namely, thicknesses of both the teeth rows 31, 28; 31A, 28A can be made thicker, and therefore, the strengths of both the teeth rows 31, 28; 31A, 28A can be enhanced.

When locking is executed, the locking pressing portions 35, 35A which are provided on the members (the first cam 34, the drive member 60) which rotate together with the operation lever 26 press against the locking pressed portions 36, 36A which are provided on the movable teeth row formed members 30, 30A via the elastic members 32, 32A, whereby even in the event that the state occurs in which the face portions of the teeth of the movable teeth rows 31, 31A are brought into abutment with the face portions of the teeth of the fixed teeth rows 28, 28A, it is possible to obtain sufficient lock holding force between both the teeth rows 31, 28; 31A, 28A.

When lock releasing is executed, the lock releasing pressing portions 38, 38A which are provided on the members (the first cam 34, the drive member 60) which rotate together with the operation lever 26 press against the lock releasing pressed portions 39, 39A which are provided on the movable teeth row formed members 30, 30A, whereby the lock can be released in an ensured fashion.

In addition, when locking is executed, the holding force with which the operation lever 26 is held in position can be obtained by the cam mechanism 46 which includes the first cam 34 and the second cam 47 which are brought into engagement with each other. The locking pressing portion 35 is provided on the first cam 34, and therefore, the configuration can be simplified.

In the invention, the fixed teeth row formed member 27A, the movable teeth row formed member 30A, the elastic member 32A and the drive member 60 may be deleted.

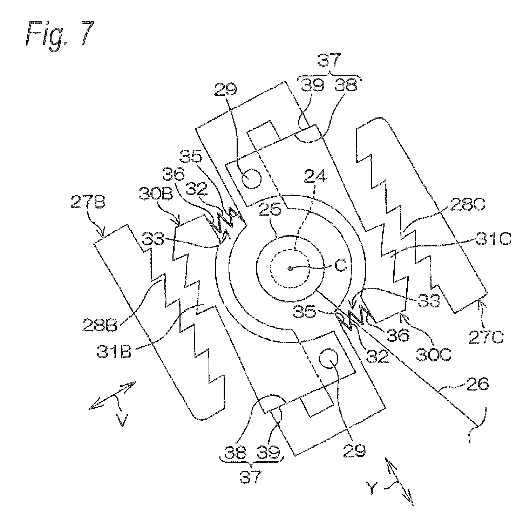

In addition, as shown in Fig. 7, for example, a plurality (for example, a pair) of fixed teeth row formed members 27B, 27C may be provided so as to face each other radially of an operation shaft 24 so that they are disposed on a circumference of the operation shaft 24. Then, a plurality (for example, a pair) of movable teeth row formed members 30B, 30C may be disposed which have movable teeth rows 31B, 31C which are brought into meshing engagement individually with respective fixed teeth rows 28B, 28C of the fixed teeth row formed members 27B, 27C. In the configuring elements of the embodiment shown in Fig. 7, similar reference numerals to those of the configuring elements of the embodiment shown in Fig. 4 are given to similar configuring elements to those of the embodiment shown in Fig. 4. According to the embodiment shown in Fig. 7, the tilt lock holding force is enhanced remarkably by increasing the number of teeth rows which are brought into meshing engagement with each other.

The invention is not limited by the embodiments that have been described heretofore, and hence, the mechanism used for the tilt lock may be used for the telescopic lock. In addition, the invention can be modified variously without departing from the scope of claims made hereinafter.

### Industrial Applicability

According to the invention, the steering device is provided which can provide a good operation feeling of the operation lever, which can obtain sufficient lock holding force even in the event that the state occurs in which the face portions of the teeth of the fixed and movable teeth rows are in abutment with each other, and which can execute a lock release in an ensured fashion.

### Reference Signs List

1 steering device
2 steering member
3 steering mechanism
4 steering shaft
8 steering column
17 column bracket
18 fixed bracket
19 tilt lock mechanism
20 telescopic lock mechanism
21 L, 21 R fixed side plate
22 tilt hole (passage hole)
23L, 23R column side plate
24 operation shaft
25 head portion
26 operation lever
27, 27A
27B, 27C fixed teeth row formed member
28, 28A
28B, 28C fixed teeth row
29, 29A pivot shaft
30, 30A
30B, 30C movable teeth row formed member
31, 31A
31 B, 31 C movable teeth row
32, 32A elastic member
33, 33A lock biasing mechanism
34 first cam (member rotating together with operation lever)
35, 35A locking pressing portion
36, 36A locking pressed portion
37, 37A lock releasing mechanism
38, 38A lock releasing pressing portion
39, 39A lock releasing pressed portion
40 passage hole
44 tightening mechanism
45 nut
46 cam mechanism
47 second cam
48 tightening member
49, 50 thrust bearing
60 drive member (member rotating together with operation lever)
C center axis
R1 locking direction
R2 lock releasing direction
T1 first rotating direction
T2 second rotating direction
V perpendicular direction
X telescoping direction (axial direction)
Y tilting direction
Z axial direction (of operation shaft).

## Claims

1. A steering device which enables a positional adjustment in a position adjusting direction, comprising:
a steering shaft to one end of which a steering member is connected;
a steering column which supports the steering shaft rotatably;
a fixed bracket which is fixed to a vehicle body;
a column bracket which is fixed to the steering column and which is configured to move together with at least a portion of the steering column in the position adjusting direction when a position of the steering column is adjusted; and
a lock mechanism which locks the steering column so as to be able to be released to a state in which the position of the steering column can be adjusted, wherein
the lock mechanism includes:
an operation shaft which passes through a passage hole in a fixed side plate of the fixed bracket and a passage hole in a column side plate of the column bracket;
an operation lever which is operated to rotate in a locking direction or a lock releasing direction about a center axis of the operation shaft;
a fixed teeth row formed member which is fixed to the fixed bracket and which is formed with a fixed teeth row undulating in a perpendicular direction intersecting an axial direction of the operation shaft at right angles;
a movable teeth row formed member which can move together with the operation shaft in the position adjusting direction, which is supported around a pivot shaft parallel to the operation shaft so as to rotate in a first rotating direction and a second rotating direction, and which is formed with a movable teeth row that meshes with the fixed teeth row when the movable teeth row formed member rotates in the first rotating direction and that moves away from the fixed teeth row when the movable teeth row formed member rotates in the second rotating direction;
a lock biasing mechanism which includes an elastic member and which biases the movable teeth row formed member in the first rotating direction via the elastic member so that the movable teeth row meshes with the fixed teeth row when the operation lever is operated to rotate in the locking direction; and
a lock releasing mechanism which causes the movable teeth row formed member to rotate in the second rotating direction against the elastic member so that the movable teeth row moves away from the fixed teeth row when the operation lever is operated to rotate in the lock releasing direction.

2. The steering device according to Claim 1, wherein
the lock biasing mechanism includes:
a locking pressing portion which is provided on the operation lever or a member which rotates together with the operation lever; and
a locking pressed member which is provided on the movable teeth row formed member, and
the elastic member is interposed between the locking pressing portion and the locking pressed portion.

3. The steering device according to Claim 1 or 2, wherein
the lock releasing mechanism includes:
a lock releasing pressing portion which is provided on the operation lever or a member which rotates together with the operation lever; and
a lock releasing pressed portion which is provided on the movable teeth row formed member.

4. The steering device according to Claim 2 or 3, wherein
the steering device includes a tightening mechanism which tightens the fixed side plates against the column side plates,
the tightening mechanism includes a cam mechanism which includes a first cam fitted on the operation shaft to rotate together with the operation lever and a second cam fitted on the operation shaft to be restricted from rotating by the passage hole of the fixed bracket and brought into engagement with the first cam, and
the locking pressing portion is provided on the first cam.

5. The steering device according to any one of Claims 1 to 3, further comprising:
a plurality of fixed teeth row formed members; and
a plurality of movable teeth row formed members, each of which includes a movable teeth row meshing with a corresponding fixed teeth row of each of the plurality of fixed teeth row formed members.
